# EUROPÄISCHE PATENTSCHRIFT

(11) **EP 1 747 964 B1**
(45) Veröffentlichungstag und Bekanntmachung des Hinweises auf die Patenterteilung: **27.09.2017**
(21) Anmeldenummer: 06013861.7
(22) Anmeldetag: 04.07.2006
(51) Int. Cl.: B62D 1/00

(54) **Bedienelementeeinheit mit Minihebeln**
Operating element with mini lever
Élément de commande avec mini-levier

(30) Priorität: 28.07.2005 DE 102005035389
(43) Veröffentlichungstag der Anmeldung: 31.01.2007
(73) Patentinhaber: STILL GmbH, 22113 Hamburg (DE)
(72) Erfinder: Tödter, Joachim, Dr., 22391 Hamburg (DE)
(74) Vertreter: Patentship Patentanwaltsgesellschaft mbH

(56) Entgegenhaltungen:
- EP-A- 1 350 668
- GB-A- 2 387 366

## Beschreibung

Die Erfindung betrifft eine Bedienelementeeinheit für ein Flurförderzeug, insbesondere für einen Gegengewichtsgabelstapler, mit einer Armlehne und mit mindestens drei Minihebeln, die von einer Bedienperson mit den Fingern betätigbar sind.

Bedienanordnungen der genannten Art sind für verschiedene Typen von Flurförderzeugen mit Fahrersitz, wie beispielsweise Gegengewichtsgabelstaplern oder Schubmast- oder Schubgabelstaplern bekannt. Bei Gegengewichtsgabelstaplern ist der Fahrersitz und damit die Armlehne in Längsrichtung des Flurförderzeugs ausgerichtet; bei Schubmast- oder Schubgabelstaplern sind Fahrersitz und Armlehne in der Regel in Fahrzeugquerrichtung angeordnet. Alle Richtungs- und Positionsangaben beziehen sich im Folgenden auf die Orientierung einer auf dem Fahrersitz sitzenden Bedienperson, wobei von einer Blickrichtung der Bedienperson parallel zur Armlehne ausgegangen wird. Die Begriffe "vorne" und "hinten" werden derart verwendet, dass sich "vorne" auf der Armlehne die Hand der Bedienperson befindet und "hinten" auf der Armlehne der Ellenbogen.

Die Minihebel befinden sich vor der Armlehne oder in einem vorderen Abschnitt der Armlehne, derart, dass sich die Finger eines auf der Armlehne abgestützten Unterarms der Bedienperson im Bereich der Minihebel befinden. Die Minihebel dienen in einem Flurförderzeug in der Regel zur Bedienung der Lasthandhabungsfunktionen, wie Anheben und Absenken eines Lastaufnahmemittels, Neigen eines Hubgerüsts, seitliches Verschieben eines Lastaufnahmemittels und gegebenenfalls einer hydraulischen Zusatzfunktion. Ein weiterer Minihebel ist als Fahrtrichtungsschalter des Flurförderzeugs vorgesehen, mit dem der Fahrantrieb zwischen Vorwärtsfahrt und Rückwärtsfahrt umgeschaltet werden kann.

Bekannt ist hierbei eine Anordnung der Minihebel entlang einer Reihe. Bekannt ist es ebenfalls, die Minihebel auf einem Kreisbogen anzuordnen, sodass jeder Minihebel durch Drehen der Hand um das Handgelenk mit Zei gefinger und Daumen erreichbar ist. Diese bekannten Anordnungen der Minihebel haben den Nachteil, dass für die wechselweise Betätigung unterschiedlicher Funktionen stets ein Umgreifen zwischen den Minihebeln erforderlich ist. Dieses Umgreifen erfordert eine Bewegung der Hand oder des Unterarms der Bedienperson und kann zu einer beschleunigten Ermüdung der Bedienperson führen. Darüber hinaus birgt das Umgreifen zwischen den Minihebeln die Gefahr von Fehlbedienungen, wenn die Bedienperson die Minihebel untereinander verwechselt.

Aus der EP 1 350 668 A2 und der GB 2 387 366 A sind gattungsgemäße Bedienelementeinheiten bekannt.

Der vorliegenden Erfindung liegt die Aufgabe zugrunde, eine ermüdungsarme Bedienanordnung zur Verfügung zu stellen, bei der die Gefahr einer Fehlbedienung vermindert ist.

Diese Aufgabe wird erfindungsgemäß durch die Merkmale des Patentanspruchs 1 gelöst. Die Minihebel sind derart angeordnet, dass jedem Minihebel genau ein Finger einer Hand der Bedienperson zugeordnet ist, derart, dass sich die Fingerspitzen der Hand eines auf der Armlehne abgestützten Arms genau über dem jeweiligen Minihebel befinden. Bei einer normalen Handhaltung der Bedienperson befindet sich über jedem Minihebel genau ein bestimmter Finger. Dies bedeutet, dass beispielsweise der Minihebel zur Betätigung der Hubfunktion des Flurförderzeugs im Bereich der Fingerspitze des Zeigefingers angeordnet ist und ausschließlich mit dem Zeigefinger betätigt wird. Analog hierzu befindet sich der Minihebel zur Betätigung der Neigefunktion für ein Hubgerüst im Bereich der Fingerspitze des Mittelfingers und wird ausschließlich durch Bewegen des Mittelfingers betätigt. Ein Minihebel zur Vorwahl der Fahrtrichtung des Flurförderzeugs ist im Bereich der Kuppe des Daumens angeordnet und wird durch Bewegen des Daumens betätigt. Auch die wechselweise oder gleichzeitige Betätigung der Minihebel erfordert keine Bewegung der Hand oder des Arms der Bedienperson, sondern ausschließlich eine Bewegung des dem jeweiligen Minihebel zugeordneten Fingers.

Gemäß einer Weiterbildung dieser Anordnung sind mindestens vier Minihebel vorgesehen. Der vierte Minihebel ist dem Ringfinger der Hand der Bedienperson zugeordnet und dient zur Betätigung eines Seitenschiebers eines Lastaufnahmemittels des Flurförderzeugs.

Es können auch fünf Minihebel vorgesehen sein, wobei dann jedem Finger der Hand der Bedienperson ein Minihebel zugeordnet ist. Der Minihebel für den kleinen Finger ist zur Betätigung einer Zusatzfunktion des Flurförderzeugs vorgesehen, beispielsweise eines Lastgreifers oder einer Ballenklammer.

Zweckmäßigerweise sind die Minihebel zur Betätigung mit der rechten Hand der Bedienperson vorgesehen. Dies entspricht der in Flurförderzeugen üblichen Bedienanordnung, bei der die Steuerung der Lasthandhabungsfunktionen mit der rechten Hand erfolgt, während die Lenkung mit der linken Hand betätigt wird.

Gemäß einer zweckmäßigen Ausgestaltung ist mindestens ein Minihebel um eine im Wesentlichen horizontale Schwenkachse schwenkbar, wobei die Schwenkachse im Wesentlichen senkrecht zu dem dem Minihebel zugeordneten Finger ausgerichtet ist. Ausgehend von seiner Neutralstellung kann der Minihebel um die Schwenkachse nach hinten oder nach vorne geschwenkt werden. Die Betätigung des Minihebels erfolgt dabei durch Strecken oder Beugen des betreffenden Fingers, wodurch eine auf der Oberseite des Minihebels angeordnete Betätigungsfläche nach vorne bzw. nach hinten bewegt und hierdurch der gesamte Minihebel geschwenkt wird. Die Schwenkachse ist senkrecht zu dem Finger ausgerichtet, sodass die Betätigungsfläche in Längsrichtung des Fingers zu bewegen ist. Vorzugsweise ist jeder der Minihebel so ausgerichtet, dass seine Schwenkachse senkrecht zu dem betreffenden Finger ausgerichtet ist.

Die Schwenkachse des dem Mittelfinger zugeordneten Minihebels ist zumindest annähernd senkrecht zu einer Längsachse der Armlehne ausgerichtet. Die Armlehne, der auf die Armlehne aufgelegte Unterarm und der Mittelfinger sind damit zueinander parallel ausgerichtet. Dies entspricht einer natürlichen und entspannten Handhaltung der Bedienperson.

Die Schwenkachsen der anderen Minihebel sind gegenüber der des Mittelfingers geringfügig gedreht. Der Winkel dieser Drehung ergibt sich aus der Fingerstellung einer typischen menschlichen Hand. Sämtliche Minihebel sind dabei so ausgerichtet, dass sich eine natürliche und entspannte Finger- und Handhaltung der Bedienperson ergibt:
- Die Schwenkachse des dem Zeigefinger zugeordneten Minihebels ist zwischen 5 und 9 Grad, vorzugsweise zwischen 6 und 8 Grad im Gegenuhrzeigersinn gegenüber der Schwenkachse des Minihebels des Mittelfingers gedreht.
- Die Schwenkachse des dem Ringfinger zugeordneten Minihebels ist zwischen 8 und 12 Grad, vorzugsweise zwischen 9 und 11 Grad im Uhrzeigersinn gegenüber der Schwenkachse des Minihebels des Mittelfingers gedreht.
- Die Schwenkachse des dem kleinen Finger zugeordneten Minihebels ist zwischen 16 und 24 Grad, vorzugsweise zwischen 18 und 22 Grad im Uhrzeigersinn gegenüber der Schwenkachse des Minihebels des Mittelfingers gedreht.
- Die Schwenkachse des dem Daumen zugeordneten Minihebels ist zwischen 5 und 9 Grad, vorzugsweise zwischen 6 und 8 Grad im Gegenuhrzeigersinn gegenüber der Schwenkachse des Minihebels des Mittelfingers gedreht.

Wie oben bereits erwähnt, weist mindestens ein Minihebel, vorzugsweise jedoch jeder Minihebel auf der Oberseite eine Betätigungsfläche aufweist, an welcher der Minihebel mit der Fingerspitze oder der Fingerkuppe des dem Minihebel zugeordneten Fingers betätigbar ist. Die Betätigungsfläche ist derart geformt, dass es möglich ist, mit der Fingerspitze oder der Fingerkuppe die Oberseite des Minihebels nach vorne und hinten zu bewegen und dadurch eine Schwenkbewegung des Minihebels zu erzeugen. Der Ort der Betätigungsfläche ist definiert durch ihren Mittelpunkt, welcher im Wesentlichen dem Flächenschwerpunkt des Minihebels entspricht.

Gemäß einer vorteilhaften Weiterbildung der Erfindung weist mindestens ein Minihebel, vorzugsweisse jeder Minihebel, im Bereich der Betätigungsfläche ein Mittel zum Erhöhen der Reibung, beispielsweise eine Gummierung, auf. Durch das Mittel zum Erhöhen der Reibung wird es der Bedienperson erleichtert, die erforderliche Kraft auf den Minihelbel auszuüben, um diesen nach vorne oder nach hinten zu schwenken.

Die Minihebel sind so angeordnet, dass sie von Bedienpersonen unterschiedlicher Körpergröße, die damit auch unterschiedlich große Hände aufweisen, mit einer entspannten, natürlichen Haltung der Hand und der Finger erreicht und betätigt werden können. Die im Folgenden beschriebene Anordnung für die Betätigungsflächen der Minihebel ist optimiert für Bedienpersonen aller Körpergrößen, von einer 5-Perzentil-Frau bis zu einem 95-Perzentil-Mann. Für eine kleine Bedienperson werden die Minihebel insgesamt, beispielsweise gemeinsam mit der Armlehne, nach hinten verschoben, während die Minihebel für eine große Bedienperson gemeinsam nach vorne verschoben werden. Die Position der Minihebel relativ zueinander ändert sich dabei nicht. Eine optimale Anordnung der Minihebel relativ zueinander ergibt sich bei folgenden Abständen:
- Der Mittelpunkt der Betätigungsfläche des dem Zeigefinger zugeordneten Minihebels ist gegenüber dem Mittelpunkt der Betätigungsfläche des dem Mittelfinger zugeordneten Minihebels zwischen 3 und 11 Millimeter, vorzugsweise zwischen 5 und 9 Millimeter nach hinten und zwischen 26 und 46 Millimeter, vorzugsweise zwischen 31 und 41 Millimeter nach links versetzt.
- Der Mittelpunkt der Betätigungsfläche des dem Ringfinger zugeordneten Minihebels ist gegenüber dem Mittelpunkt der Betätigungsfläche des dem Mittelfinger zugeordneten Minihebels zwischen 8 und 16 Millimeter, vorzugsweise zwischen 10 und 14 Millimeter nach hinten und zwischen 25 und 45 Millimeter, vorzugsweise zwischen 30 und 40 Millimeter nach rechts versetzt.
- Der Mittelpunkt der Betätigungsfläche des dem kleinen Finger zugeordneten Minihebels ist gegenüber dem Mittelpunkt der Betätigungsfläche des dem Mittelfinger zugeordneten Minihebels zwischen 35 und 51 Millimeter, vorzugsweise zwischen 39 und 47 Millimeter nach hinten und zwischen 53 und 81 Millimeter, vorzugsweise zwischen 58 und 76 Millimeter nach rechts versetzt.
- Der Mittelpunkt der Betätigungsfläche des dem Daumen zugeordneten Minihebels ist gegenüber dem Mittelpunkt der Betätigungsfläche des dem Mittelfinger zugeordneten Minihebels zwischen 44 und 68 Millimeter, vorzugsweise zwischen 50 und 62 Millimeter nach hinten und zwischen 28 und 48 Millimeter, vorzugsweise zwischen 33 und 43 Millimeter nach links versetzt.

Eine zweckmäßige Weiterbildung der Erfindung sieht vor, dass der dem Ringfinger zugeordnete Minihebel und/oder der dem kleinen Finger zugeordnete Minihebel eine geringere Breite aufweist als der dem Mittelfinger zugeordnete Minihebel. Die Breite der Minihebel ist dabei an die Breite der Finger angepasst. Die Minihebel für den Ringfinger bzw. für den kleinen Finger benötigen damit weniger Einbauraum, sodass der Abstand zwischen den Betätigungsflächen dieser Minihebel weiter verringert werden kann.

Derselbe Vorteil ergibt sich, wenn der dem kleinen Finger zugeordnete Minihebel eine geringere Breite aufweist als der dem Ringfinger zugeordnete Minihebel.

Weitere Vorteile und Einzelheiten der Erfindung werden anhand der in den schematischen Figuren dargestellten Ausführungsbeispiele näher erläutert. Dabei zeigt
- Figur 1: eine erfindungsgemäße Bedienelementeeinheit in Draufsicht,
- Figur 2: eine erfindungsgemäße Bedienelementeeinheit mit teilweise schmäleren Minihebeln,
- Figur 3: eine Armlehne im Längsschnitt.

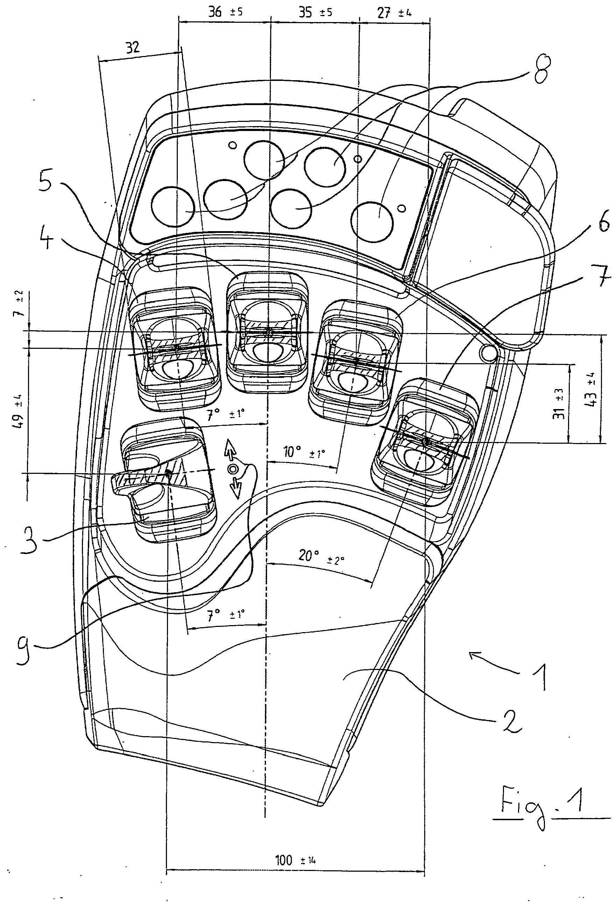

In Figur 1 ist eine erfindungsgemäße Bedienelementeeinheit in Draufsicht dargestellt. Die Bedienelementeeinheit ist in eine Armlehne 1 eines Flurförderzeugs integriert. Zu erkennen ist eine Armauflage 2, auf der die Bedienperson ihren Unterarm auflegen und abstützen kann. Fünf Minihebel 3, 4, 5, 6, 7 sind in einer Vertiefung der Armlehne angeordnet, derart, dass die Bedienperson mit den Fingern der Hand des auf der Armauflage 2 aufgelegten Unterarms nach unten greifen kann, um zu den Minihebeln 3, 4, 5, 6, 7 zu gelangen. Vor den Minihebeln sind weitere Bedienelemente 8 angeordnet, die der Betätigung von Nebenfunktionen des Flurförderzeugs, beispielsweise der Hupe, der Beleuchtung oder einer Auswahl von Fahrprogrammen dienen. Diese Bedienelemente 8 sind gegenüber den Minihebeln erhöht angeordnet, in etwa auf Höhe der Armauflage 2. Diese Anordnung von Armauflage 2, Minihebeln 3, 4, 5, 6, 7 und Bedienelementen 8 ist in der gleichzeitig eingereichten Patentanmeldung DE 10 2005 035 382 A1 der Anmelderin detailliert beschrieben.

Erfindungsgemäß sind die Minihebel 3, 4, 5, 6, 7 derart angeordnet und ausgerichtet, dass jeder Minihebel 3, 4, 5, 6, 7 mit genau einem Finger einer Hand - in diesem Fall der rechten Hand - bewegt werden kann. Die Minihebel 3, 4, 5, 6, 7 weisen hierzu auf der Oberseite eine schraffiert eingezeichnete Betätigungsfläche auf. Die Lage der Betätigungsfläche und damit des Minihebels 3, 4, 5, 6, 7 ist definiert durch einen ebenfalls eingezeichneten Mittelpunkt der Betätigungsfläche, der im vorliegenden Ausführungsbeispiel in der Ansicht von oben auch den Mittelpunkt des gesamten Minihebels 3, 4, 5, 6, 7 darstellt. Die Betätigung eines Minihebels 3, 4, 5, 6, 7 erfolgt dadurch, dass er um seine mittig angeordnete Schwenkachse nach vorne oder nach hinten geschwenkt wird. Die Betätigungsrichtung ist beispielhaft für den Minihebel 3 mittels des eingezeichneten Pfeils 9 verdeutlicht.

Der Minihebel 5 für den Mittelfinger ist in Längsrichtung 10 der Armlehne 1 ausgerichtet. Die anderen Minihebel 3, 4, 6, 7 sind entsprechend einer natürlichen Fingerstellung der Hand einer Bedienperson gegenüber dem Minihebel 5 geringfügig gedreht. So sind die Minihebel 3 und 4 für den Daumen bzw. für den Zeigefinger gegenüber dem Minihebel 5 um 7°±1° im Gegenuhrzeigersinn gedreht. Der Minihebel 6 für den Ringfinger ist gegenüber dem Minihebel 5 um 10°±1° im Uhrzeigersinn gedreht. Der Minihebel 7 für den kleinen Finger ist gegenüber dem Minihebel 5 um 20°±2° im Uhrzeigersinn gedreht.

Darüber hinaus sind die Minihebel 3, 4, 5, 6, 7 relativ zueinander derart versetzt, dass jeder der Minihebel 3, 4, 5, 6, 7 sowohl für eine Bedienperson mit kleinen Händen, als auch für eine Bedienperson mit großen Händen bequem betätigbar sind. Im Folgenden wird die Position der Minihebel 3, 4, 5, 6, 7 anhand der Mittelpunkte der schraffierten Betätigungsflächen definiert. Der Minihebel 4 für den Zeigefinger ist gegenüber dem Minihebel 5 um 7±2 mm nach hinten und um 36±5 mm nach links versetzt. Der Minihebel 3 für den Daumen ist gegenüber dem Minihebel 5 um 49±4 mm nach hinten versetzt. Der Minihebel 6 für den Ringfinger ist gegenüber dem Minihebel 5 um 35±5 mm nach rechts versetzt. Der Minihebel 7 für den kleinen Finger ist gegenüber dem Minihebel 6 um 27±4 mm nach rechts und gegenüber dem Minihebel 5 um 43±4 mm nach hinten versetzt. Der Minihebel 6 ist gegenüber dem Minihebel 7 um 31±3 mm nach vorne versetzt. Der Minihebel 3 befindet sich 100±14 mm links vom Minihebel 7.

Die Breite der Minihebel beträgt bei der Ausführungsform gemäß Fig. 1 einheitlich 32 mm.

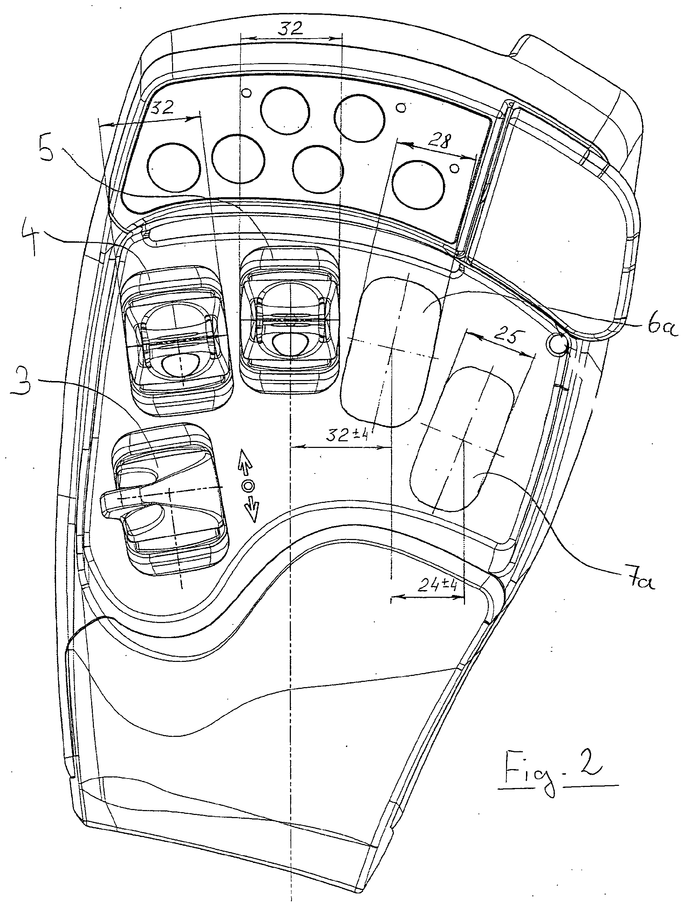

In Figur 2 ist eine Ausführungsform dargestellt, bei der die Minihebel 6a für den Ringfinger und 7a für den kleinen Finger eine geringere Breite aufweisen, nämlich 28 mm bzw. 25 mm. Diese Minihebel 6a, 7a können entsprechend enger angeordnet werden. So ist der Minihebel 6a nur um 32±4 mm rechts vom Minihebel 5 angeordnet. Der Minihebel 7a befindet sich 24±4 mm rechts vom Minihebel 6a.

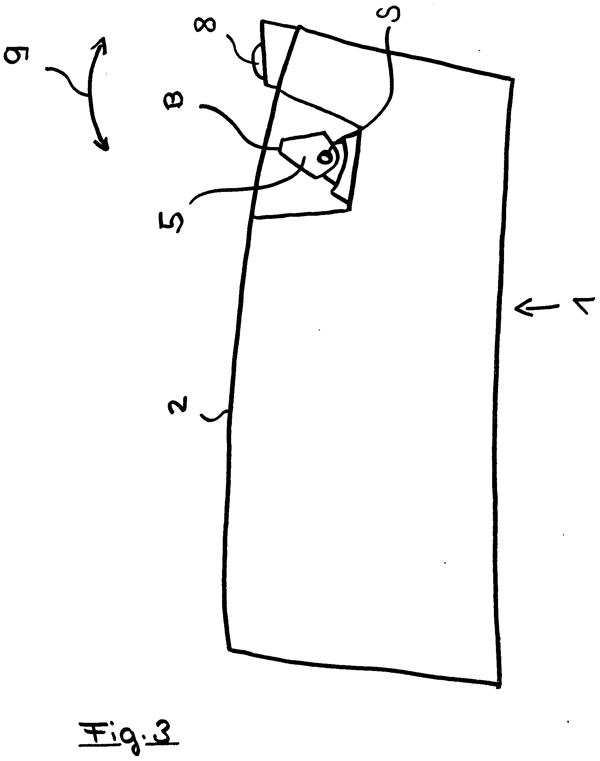

Figur 3 zeigt eine erfindungsgemäße Armlehne 1 im Schnitt durch ihre vertikale Längsmittelebene. Zu erkennen ist der in einer Vertiefung angeordnete Minihebel 5, der sich vollständig unterhalb der Armauflage 2 und des Bedienelements 8 befindet. Die Betätigungsfläche B des Minihebels 5 befindet sich auf dessen Oberseite. Der Minihebel 5 kann um die Schwenkachse S in Pfeilrichtung 9 nach vorne und nach hinten geschwenkt werden geschwenkt werden. Die Auslenkung des Minihebels 5 wird mittels eines geeigneten Sensors erfasst. Ein Ausgangssignal des Sensors wird in einer Fahrzeugsteuerung verarbeitet.

## Patentansprüche

1. Bedienelementeeinheit für ein Flurförderzeug, insbesondere für einen Gegengewichtsgabelstapler, mit einer Armlehne (1) und mit mindestens drei Minihebeln (3, 4, 5, 6, 7), die von einer Bedienperson mit den Fingern betätigbar sind,
**dadurch gekennzeichnet,**
**dass** die Minihebel (3, 4, 5, 6, 7) derart angeordnet sind, dass jedem Minihebel (3, 4, 5, 6, 7) genau ein Finger einer Hand der Bedlenperson, deren Körpergröße von einer 5-Perzentil-Frau bis zu einem 95-Perzentil-Mann reicht, zugeordnet ist, derart, dass sich die Fingerspitzen der Hand eines auf der Armlehne (1) abgestützten Arms genau über dem jeweiligen Minihebel (3, 4, 5, 6, 7) befinden, so dass die wechselweise oder gleichzeitige Betätigung der Minihebel keine Bewegung der Hand oder des Arms der Bedienperson, sondern ausschließlich eine Bewegung des dem jeweiligen Minihebel zugeordneten Fingers erfordert, wobei der Minihebel zur Betätigung der Hubfunktion des Flurförderzeugs im Bereich der Fingerspitze des Zeigefingers angeordnet ist und ausschließlich mit dem Zeigefinger betätigt wird, der Minihebel zur Betätigung der Neigefunktion für ein Hubgerüst im Bereich der Fingerspitze des Mittelfingers angeordnet ist und ausschließlich durch Bewegen des Mittelfingers betätigt wird und ein Minihebel zur Vorwahl der Fahrtrichtung des Flurförderzeugs im Bereich der Kuppe des Daumens angeordnet und durch Bewegen des Daumens betätigt wird.

2. Bedienelementeeinheit nach Anspruch 1, **dadurch gekennzeichnet, dass** mindestens vier Minihebel (3, 4, 5, 6, 7) vorgesehen sind.

3. Bedienelementeeinheit nach Anspruch 1, **dadurch gekennzeichnet, dass** fünf Minihebel (3, 4, 5, 6, 7) vorgesehen sind.

4. Bedienelementeeinheit nach einem der Ansprüche 1 bis 3, **dadurch gekennzeichnet, dass** die Minihebel (3, 4, 5, 6, 7) zur Betätigung mit der rechten Hand der Bedienperson vorgesehen sind.

5. Bedienelementeeinheit nach einem der Ansprüche 1 bis 4, **dadurch gekennzeichnet, dass** mindestens ein Minihebel (3, 4, 5, 6, 7) um eine im Wesentlichen horizontale Schwenkachse (S) schwenkbar ist, wobei die Schwenkachse (S) im Wesentlichen senkrecht zu dem dem Minihebel (3, 4, 5, 6, 7) zugeordneten Finger ausgerichtet ist.

6. Bedienelementeeinheit nach Anspruch 5, **dadurch gekennzeichnet, dass** die Schwenkachse (S) des dem Mittelfinger zugeordneten Minihebels (5) zumindest annähernd senkrecht zu einer Längsachse der Armlehne ausgerichtet ist.

7. Bedienelementeeinheit nach Anspruch 5 oder 6, **dadurch gekennzeichnet, dass** die Schwenkachse des dem Zeigefinger zugeordneten Minihebels (4) zwischen 5 und 9 Grad, vorzugsweise zwischen 6 und 8 Grad im Gegenuhrzeigersinn gegenüber der Schwenkachse (S) des Minihebels (5) des Mittelfingers gedreht ist.

8. Bedienelementeeinheit nach einem der Ansprüche 5 bis 7, **dadurch gekennzeichnet, dass** die Schwenkachse des dem Ringfinger zugeordneten Minihebels (6) zwischen 8 und 12 Grad, vorzugsweise zwischen 9 und 11 Grad im Uhrzeigersinn gegenüber der Schwenkachse (S) des Minihebels (5) des Mittelfingers gedreht ist.

9. Bedlenelementeeinheit nach einem der Ansprüche 5 bis 8, **dadurch gekennzeichnet, dass** die Schwenkachse des dem kleinen Finger zugeordneten Minihebels (7) zwischen 16 und 24 Grad, vorzugsweise zwischen 18 und 22 Grad im Uhrzeigersinn gegenüber der Schwenkachse (S) des Minihebels (5) des Mittelfingers gedreht ist.

10. Bedienelementeeinheit nach einem der Ansprüche 5 bis 9, **dadurch gekennzeichnet, dass** die Schwenkachse des dem Daumen zugeordneten Minihebels (3) zwischen 5 und 9 Grad, vorzugsweise zwischen 6 und 8 Grad im Gegenuhrzeigersinn gegenüber der Schwenkachse (S) des Minihebels des Mittelfingers (5) gedreht ist.

11. Bedienelementeeinheit nach einem der Ansprüche 1 bis 10, **dadurch gekennzeichnet, dass** mindestens ein Minihebel (3, 4, 5, 6, 7) auf der Oberseite eine Betätigungsfläche (B) aufweist, an welcher der Minihebel (3, 4, 5, 6, 7) mit der Fingerspitze oder der Fingerkuppe des dem Minihebel (3, 4, 5, 6, 7) zugeordneten Fingers betätigbar ist.

12. Bedienelementeeinheit nach einem der Ansprüche 1 bis 11, **dadurch gekennzeichnet, dass** mindestens ein Minihebel (3, 4, 5, 6, 7), vorzugsweise jeder Minihebel, Im Bereich der Betätigungsfläche (B) ein Mittel zum Erhöhen der Reibung, beispielsweise eine Gummierung, aufweist.

13. Bedienelementeeinheit nach Anspruch 11 oder 12, **dadurch gekennzeichnet, dass** der Mittelpunkt der Betätigungsfläche des dem Zeigefinger zugeordneten Minihebels (4) gegenüber dem Mittelpunkt der Betätigungsfläche (B) des dem Mittelfinger zugeordneten Minihebels (5) zwischen 3 und 11 Millimeter, vorzugsweise zwischen 5 und 9 Millimeter nach hinten und zwischen 26 und 46 Millimeter, vorzugsweise zwischen 31 und 41 Millimeter nach links versetzt ist.

14. Bedienelementeeinheit nach einem der Ansprüche 11 bis 13, **dadurch gekennzeichnet, dass** der Mittelpunkt der Betätigungsfläche des dem Ringfinger zugeordneten Minihebels (6) gegenüber dem Mittelpunkt der Betätigungsfläche (B) des dem Mittelfinger zugeordneten Minihebels (5) zwischen 8 und 16 Millimeter, vorzugsweise zwischen 10 und 14 Millimeter nach hinten und zwischen 25 und 45 Millimeter, vorzugsweise zwischen 30 und 40 Millimeter nach rechts versetzt ist.

15. Bedienelementeeinheit nach einem der Ansprüche 11 bis 14, **dadurch gekennzeichnet, dass** der Mittelpunkt der Betätigungsfläche des dem kleinen Finger zugeordneten Minihebels (7) gegenüber dem Mittelpunkt der Betätigungsfläche (B) des dem Mittelfinger zugeordneten Minihebels (5) zwischen 35 und 51 Millimeter, vorzugsweise zwischen 39 und 47 Millimeter nach hinten und zwischen 53 und 81 Millimeter, vorzugsweise zwischen 58 und 76 Millimeter nach rechts versetzt ist.

16. Bedienelementeeinheit nach einem der Ansprüche 11 bis 15, **dadurch gekennzeichnet, dass** der Mittelpunkt der Betätigungsfläche des dem Daumen zugeordneten Minihebels (3) gegenüber dem Mittelpunkt der Betätigungsfläche (B) des dem Mittelfinger zugeordneten Minihebels (5) zwischen 44 und 68 Millimeter, vorzugsweise zwischen 50 und 62 Millimeter nach hinten und zwischen 28 und 48 Millimeter, vorzugsweise zwischen 33 und 43 Millimeter nach links versetzt ist.

17. Bedienelementeeinheit nach einem der Ansprüche 1 bis 16, **dadurch gekennzeichnet, dass** der dem Ringfinger zugeordnete Minihebel (6a) und/oder der dem kleinen Finger zugeordnete Minihebel (7a) eine geringere Breite aufweist als der dem Mittelfinger zugeordnete Minihebel (5).

18. Bedienelementeeinheit nach einem der Ansprüche 1 bis 17, **dadurch gekennzeichnet, dass** der dem kleinen Finger zugeordnete Minihebel (7a) eine geringere Breite aufweist als der dem Ringfinger zugeordnete Minihebel (6a).

## Claims

1. Operating element unit for an industrial truck, in particular for a counterweight-type fork truck, having an armrest (1) and having at least three mini-levers (3, 4, 5, 6, 7) which can be activated by an operator with their fingers,
**characterized**
**in that** the mini-levers (3, 4, 5, 6, 7) are arranged in such a way that each mini-lever (3, 4, 5, 6, 7) is assigned precisely one finger of a hand of the operator, the body size of which extends from a 5-percentile woman to a 95-percentile man, in such a way that the fingertips of the hand of an arm supported on the armrest (1) are located precisely above the respective mini-lever (3, 4, 5, 6, 7), with the result that the alternate or simultaneous activation of the mini-levers does not require a movement of the hand or of the arm of the operator but exclusively a movement of the finger assigned to the respective mini-lever, wherein the mini-lever for activating the lifting function of the industrial truck, is arranged in the region of the fingertip of the index finger and is activated exclusively with the index finger, the mini-lever for activating the inclination function for a lifting frame is arranged in the range of the fingertip of the middle finger and is activated exclusively by moving the middle finger, and a mini-lever for pre-selecting the direction of travel of the industrial truck is arranged in the region of the tip of the thumb and is activated by moving the thumb.

2. Operating element unit according to Claim 1, **characterized in that** at least four mini-levers (3, 4, 5, 6, 7) are provided.

3. Operating element unit according to Claim 1, **characterized in that** five mini-levers (3, 4, 5, 6, 7) are provided.

4. Operating element unit according to one of Claims 1 to 3, **characterized in that** the mini-levers (3, 4, 5, 6, 7) are provided for activation with the operator's right hand.

5. Operating element unit according to one of Claims 1 to 4, **characterized in that** at least one mini-lever (3, 4, 5, 6, 7) can pivot about an essentially horizontal pivoting axis (S), wherein the pivoting axis (S) is oriented essentially perpendicularly with respect to the finger assigned to the mini-lever (3, 4, 5, 6, 7).

6. Operating element unit according to Claim 5, **characterized in that** the pivoting axis (S) of the mini-lever (5) assigned to the middle finger is oriented at least approximately perpendicularly with respect to a longitudinal axis of the armrest.

7. Operating element unit according to Claim 5 or 6, **characterized in that** the pivoting axis of the mini-lever (4) which is assigned to the index finger is rotated through between 5 and 9 degrees, preferably between 6 and 8 degrees, in the anti-clockwise direction with respect to the pivoting axis (S) of the mini-lever (5) of the middle finger.

8. Operating element unit according to one of Claims 5 to 7, **characterized in that** the pivoting axis of the mini-lever (6) which is assigned to the ring finger is rotated through between 8 and 12 degrees, preferably between 9 and 11 degrees, in the clockwise direction with respect to the pivoting axis (S) of the mini-lever (5) of the middle finger.

9. Operating element unit according to one of Claims 5 to 8, **characterized in that** the pivoting axis of the mini-lever (7) which is assigned to the small finger is rotated through between 16 and 24 degrees, preferably between 18 and 22 degrees, in the clockwise direction with respect to the pivoting axis (S) of the mini-lever (5) of the middle finger.

10. Operating element unit according to one of Claims 5 to 9, **characterized in that** the pivoting axis of the mini-lever (3) which is assigned to the thumb is rotated through between 5 and 9 degrees, preferably between 6 and 8 degrees, in the anti-clockwise direction with respect to the pivoting axis (S) of the mini-lever of the middle finger (5).

11. Operating element unit according to one of Claims 1 to 10, **characterized in that** at least one mini-lever (3, 4, 5, 6, 7) has on the upper side an activation face (B) on which the mini-lever (3, 4, 5, 6, 7) can be activated with the fingertip of the finger which is assigned to the mini-lever (3, 4, 5, 6, 7).

12. Operating element unit according to one of Claims 1 to 11, **characterized in that** at least one mini-lever (3, 4, 5, 6, 7), preferably each mini-lever, has, in the region of the activation face (B), a means for increasing the friction, for example a rubber coating.

13. Operating element unit according to Claim 11 or 12, **characterized in that** the centre point of the activation face of the mini-lever (4) which is assigned to the index finger is offset with respect to the centre point of the activation face (B) of the mini-lever (5) assigned to the middle finger, by between 3 and 11 millimetres, preferably between 5 and 9 millimetres, to the rear, and by between 26 and 46 millimetres, preferably between 31 and 41 millimetres, to the left.

14. Operating element unit according to one of Claims 11 to 13, **characterized in that** the centre point of the activation face of the mini-lever (6) which is assigned to the ring finger is offset with respect to the centre point of the activation face (B) of the mini-lever (5) which is assigned to the middle finger, by between 8 and 16 millimetres, preferably by between 10 and 14 millimetres, to the rear, and by between 25 and 45 millimetres, preferably by between 30 and 40 millimetres, to the right.

15. Operating element unit according to one of Claims 11 to 14, **characterized in that** the centre point of the activation face of the mini-lever (7) which is assigned to the small finger is offset with respect to the centre point of the activation face (B) of the mini-lever (5) which is assigned to the middle finger, by between 35 and 51 millimetres, preferably by between 39 and 47 millimetres, to the rear, and by between 53 and 81 millimetres, preferably by between 58 and 76 millimetres, to the right.

16. Operating element unit according to one of Claims 11 to 15, **characterized in that** the centre point of the activation face of the mini-lever (3) which is assigned to the thumb is offset with respect to the centre point of the activation face (B) of the mini-lever (5) which is assigned to the middle finger, by between 44 and 68 millimetres, preferably by between 50 and 62 millimetres to the rear, and by between 28 and 48 millimetres, preferably by between 33 and 43 millimetres, to the left.

17. Operating element unit according to one of Claims 1 to 16, **characterized in that** the mini-lever (6a) which is assigned to the ring finger and/or the mini-lever (7a) which is assigned to the small finger have/has a smaller width than the mini-lever (5) which is assigned to the middle finger.

18. Operating element unit according to one of Claims 1 to 17, **characterized in that** the mini-lever (7a) which is assigned to the small finger has a smaller width than the mini-lever (6a) which is assigned to the ring finger.

## Revendications

1. Unité d'éléments de commande pour un chariot de manutention, en particulier pour un chariot élévateur à fourche à contrepoids, avec un accoudoir (1) et avec au moins trois mini-leviers (3, 4, 5, 6, 7), qui peuvent être actionnés avec les doigts par un opérateur,
**caractérisée en ce que** les mini-leviers (3, 4, 5, 6, 7) sont disposés de telle manière qu'à chaque mini-levier (3, 4, 5, 6, 7) soit associé exactement un doigt d'une main de l'opérateur, dont la taille s'étale d'un percentile 5-femme à un percentile 95-homme, de telle manière que les bouts des doigts de la main d'un bras appuyé sur l'accoudoir (1) se trouvent exactement au-dessus du mini-levier respectif (3, 4, 5, 6, 7), de sorte qu'un actionnement alternatif ou simultané des mini-leviers ne nécessite aucun mouvement de la main ou du bras de l'opérateur, mais exclusivement un mouvement du doigt associé au mini-levier respectif, dans laquelle le mini-levier destiné à actionner la fonction de levage d'un chariot de manutention est disposé dans la zone du bout de doigt de l'index et est actionné exclusivement avec l'index, le mini-levier destiné à actionner la fonction d'inclinaison pour un cadre de levage est disposé dans la zone du bout de doigt du majeur et est actionné exclusivement par un mouvement du majeur et un mini-levier destiné à présélectionner la direction de déplacement du chariot de manutention est disposé dans la zone du bout du pouce et est actionné par un mouvement du pouce.

2. Unité d'éléments de commande selon la revendication 1, **caractérisée en ce qu'**il est prévu au moins quatre mini-leviers (3, 4, 5, 6, 7).

3. Unité d'éléments de commande selon la revendication 1, **caractérisée en ce qu'**il est prévu cinq mini-leviers (3, 4, 5, 6, 7).

4. Unité d'éléments de commande selon l'une quelconque des revendications 1 à 3, **caractérisée en ce que** les mini-leviers (3, 4, 5, 6, 7) sont prévus pour l'actionnement avec la main droite de l'opérateur.

5. Unité d'éléments de commande selon l'une quelconque des revendications 1 à 4, **caractérisée en ce qu'**au moins un mini-levier (3, 4, 5, 6, 7) est pivotant autour d'un axe de pivotement (S) essentiellement horizontal, dans laquelle l'axe de pivotement (S) est orienté essentiellement perpendiculairement au doigt associé au mini-levier (3, 4, 5, 6, 7).

6. Unité d'éléments de commande selon la revendication 5, **caractérisée en ce que** l'axe de pivotement (S) du mini-levier (5) associé au majeur est orienté au moins approximativement perpendiculairement à un axe longitudinal de l'accoudoir.

7. Unité d'éléments de commande selon la revendication 5 ou 6, **caractérisée en ce que** l'axe de pivotement du mini-levier (4) associé à l'index est tourné de 5 à 9 degrés, de préférence de 6 à 8 degrés, dans le sens antihoraire par rapport à l'axe de pivotement (S) du mini-levier (5) du majeur.

8. Unité d'éléments de commande selon l'une quelconque des revendications 5 à 7, **caractérisée en ce que** l'axe de pivotement du mini-levier (6) associé à l'annulaire est tourné de 8 à 12 degrés, de préférence de 9 à 11 degrés dans le sens horaire par rapport à l'axe de pivotement (S) du mini-levier (5) du majeur.

9. Unité d'éléments de commande selon l'une quelconque des revendications 5 à 8, **caractérisée en ce que** l'axe de pivotement du mini-levier (7) associé à l'auriculaire est tourné de 16 à 24 degrés, de préférence de 18 à 22 degrés dans le sens horaire par rapport à l'axe de pivotement (S) du mini-levier (5) du majeur.

10. Unité d'éléments de commande selon l'une quelconque des revendications 5 à 9, **caractérisée en ce que** l'axe de pivotement du mini-levier (3) associé au pouce est tourné de 5 à 9 degrés, de préférence de 6 à 8 degrés dans le sens antihoraire par rapport à l'axe de pivotement (S) du mini-levier (5) du majeur.

11. Unité d'éléments de commande selon l'une quelconque des revendications 1 à 10, **caractérisée en ce qu'**au moins un mini-levier (3, 4, 5, 6, 7) présente sur le côté supérieur une face d'actionnement (B), sur laquelle le mini-levier (3, 4, 5, 6, 7) peut être actionné avec le bout de doigt ou le bout de pouce du doigt associé au mini-levier (3, 4, 5, 6, 7).

12. Unité d'éléments de commande selon l'une quelconque des revendications 1 à 11, **caractérisée en ce qu'**au moins un mini-levier (3, 4, 5, 6, 7), de préférence chaque mini-levier, présente dans la région de la face d'actionnement (B) un moyen pour augmenter le frottement, par exemple du caoutchouc.

13. Unité d'éléments de commande selon la revendication 11 ou 12, **caractérisée en ce que** le point central de la face d'actionnement du mini-levier (4) associé à l'index est décalé vers l'arrière de 3 à 11 millimètres, de préférence de 5 à 9 millimètres et vers la gauche de 26 à 46 millimètres, de préférence de 31 à 41 millimètres, par rapport au point central de la face d'actionnement (B) du mini-levier (5) associé au majeur.

14. Unité d'éléments de commande selon l'une quelconque des revendications 11 à 13, **caractérisée en ce que** le point central de la face d'actionnement du mini-levier (6) associé à l'annulaire est décalé vers l'arrière de 8 à 16 millimètres, de préférence de 10 à 14 millimètres et vers la droite de 25 à 45 millimètres, de préférence de 30 à 40 millimètres, par rapport au point central de la face d'actionnement (B) du mini-levier (5) associé au majeur.

15. Unité d'éléments de commande selon l'une quelconque des revendications 11 à 14, **caractérisée en ce que** le point central de la face d'actionnement du mini-levier (7) associé à l'auriculaire est décalé vers l'arrière de 35 à 51 millimètres, de préférence de 39 à 47 millimètres et vers la droite de 53 à 81 millimètres, de préférence de 58 à 76 millimètres, par rapport au point central de la face d'actionnement (B) du mini-levier (5) associé au majeur.

16. Unité d'éléments de commande selon l'une quelconque des revendications 11 à 15, **caractérisée en ce que** le point central de la face d'actionnement du mini-levier (3) associé au pouce est décalé vers l'arrière de 44 à 68 millimètres, de préférence de 50 à 62 millimètres et vers la gauche de 28 à 48 millimètres, de préférence de 33 à 43 millimètres, par rapport au point central de la face d'actionnement (B) du mini-levier (5) associé au majeur.

17. Unité d'éléments de commande selon l'une quelconque des revendications 1 à 16, **caractérisée en ce que** le mini-levier (6a) associé à l'annulaire et/ou le mini-levier (7a) associé à l'auriculaire présente une largeur plus faible que le mini-levier (5) associé au majeur.

18. Unité d'éléments de commande selon l'une quelconque des revendications 1 à 17, **caractérisée en ce que** le mini-levier (7a) associé à l'auriculaire présente une largeur plus faible que le mini-levier (6a) associé à l'annulaire.
